# EUROPÄISCHE PATENTANMELDUNG

(11) **EP 3 697 019 A1**
(43) Veröffentlichungstag der Anmeldung: **19.08.2020**
(21) Anmeldenummer: 19156685.0
(22) Anmeldetag: 12.02.2019
(51) Int. Cl.: H04L 9/00, H04L 9/32, H04L 9/08

(54) **VERFAHREN ZUR BEREITSTELLUNG EINES HERKUNFTSORTNACHWEISES FÜR EIN DIGITALES SCHLÜSSELPAAR**

(71) Anmelder: Siemens Aktiengesellschaft, 80333 München (DE)
(72) Erfinder: Brockhaus, Hendrik, 85579 Unterbiberg (DE); Bußer, Jens-Uwe, 85579 Neubiberg (DE)

(57) **Zusammenfassung**

Die Erfindung beansprucht ein Verfahren zur Bereitstellung eines Herkunftsortnachweises (AN) für ein digitales Schlüsselpaar (P,Q), aufweisend folgende Schritte:
- Erzeugen des digitalen Schlüsselpaares (P, Q) an einem durch ein Gerät (D) vorgegebenen Herkunftsort (C), wobei der private Schlüssel (P) des digitalen Schlüsselpaares (P, Q) im Gerät (D) zugriffsgeschützt abgelegt ist,
- Bereitstellen des Herkunftsnachweises (AN), welcher die Erzeugung des digitalen Schlüsselpaares (P,Q) am genannten Herkunftsort (C) bestätigt und welcher mittels eines vom selben Gerät (D) bereitgestellten geheimen Schlüssels (G1) geschützt wird, und
- Ausgeben des öffentlichen Schlüssels (Q) des erzeugten digitalen Schlüsselpaares (P, Q) zusammen mit dem Herkunftsnachweis (AN).

## Beschreibung

Die Erfindung betrifft ein Verfahren zur Bereitstellung eines Herkunftsortnachweises für ein digitales Schlüsselpaar, insbesondere geeignet zur Verwendung in einer Anforderung einer Authentizitätsbescheinigung, wie z.B. eines digitalen Zertifikats, insbesondere eines Gerätezertifikats, sowie zugehörige Vorrichtungen.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

In einem zertifikatbasierten System erhält jede Person oder jedes Objekt eine Authentizitätsbescheinigung, wie beispielsweise ein digitales Zertifikat, welches Angaben zu seiner Identität und einen öffentlichen Schlüssel der Person bzw. des Objekts enthält. Jedes Zertifikat ist von einer ausgebenden Stelle durch eine digitale Signatur beglaubigt, die ihrerseits wieder von höheren Stellen beglaubigt sein kann. Das Vertrauenssystem einer solchen Private Key Infrastructure PKI ist streng hierarchisch. Den gemeinsamen Vertrauensanker bildet ein sogenanntes Wurzelzertifikat, auch Root Certificate genannt, welches in allen relevanten Systemkomponenten authentisch konfiguriert sein muss.

Auch die Authentizität und Integrität eines digitalen Zertifikats werden durch die digitale Signatur geprüft. Dazu wird mit Hilfe eines geheimen Signaturschlüssels, auch als privater Schlüssel bezeichnet, zu einem Datensatz ein Wert berechnet, der digitale Signatur genannt wird. Dieser Wert ermöglicht es jedem, mit Hilfe des zugehörigen öffentlichen Verifikationsschlüssels, auch als öffentlicher Schlüssel bezeichnet, die nichtabstreitbare Urheberschaft und Integrität des Datensatzes zu prüfen. Um eine mit einem Signaturschlüssel erstellte Signatur einer Person zuordnen zu können, muss der zugehörige Verifikationsschlüssel dieser Person zweifelsfrei zugeordnet sein.

In einem Gerätezertifikat wird die Identität des Gerätes, beispielsweise eine Seriennummer oder MAC-Adresse des Gerätes, an einen öffentlichen Schlüssel des Gerätes gebunden. Gerätezertifikate des Herstellers werden vorzugsweise bereits in der Fertigung aufgebracht und dienen auch als Echtheitsbestätigung für das Gerät. Diese Gerätezertifikate haben üblicherweise eine sehr lange Gültigkeitsdauer, damit das Gerät dieses Zertifikat während seines gesamten Einsatzzeitraumes verwenden kann, um beispielsweise als Vertrauensanker zur Anforderung oder Erstellung von weiteren, operativen Gerätezertifikaten für den operativen Betrieb zu dienen. Zu jedem Zertifikat müssen auch das Zertifikat der ausstellenden Zertifizierungsinstanz sowie gegebenenfalls weitere Zwischenzertifikate bis zum vertrauenswürdigen Root-Zertifikat verfügbar sein und über einen entsprechend langen Zeitraum gültig sein.

Eine Zertifizierungsinstanz wird im Weiteren auch allgemein als Vorrichtung zur Ausgabe oder Ausgabevorrichtung von Zertifikaten bezeichnet.

Möglich ist ebenfalls die Speicherung von geheimen symmetrischen und privaten asymmetrischen Schlüsseln in physikalisch besonders geschützten Sicherheitsmodulen wie beispielsweise kryptographische Prozessoren, hardware security modules (HSM) oder trusted platform modules (TPM). Ein Sicherheitsmodul kann auch software-/firmwaremäßig implementiert sein. Geheime bzw. private Schlüssel können in das Sicherheitsmodul eingespielt oder darin erzeugt werden. Ein Auslesen der Schlüssel aus dem Sicherheitsmodul ist üblicherweise nicht oder nur sehr eingeschränkt möglich. Eine Durchführung von kryptographischen Algorithmen unter Verwendung des gespeicherten Schlüssels findet üblicherweise im Sicherheitsmodul selbst statt. Für die Verwendung der Schlüssel ist oft eine Authentifizierung notwendig, beispielsweise durch Übergabe einer Geheimzahl oder eines Passwortes an das Sicherheitsmodul.

Zahlreiche Produkte werden heutzutage nicht vom Markeninhaber selbst in eigenen Fabriken produziert, sondern von Auftragsproduzenten in deren Fabriken im Auftrag des Markeninhabers. Bei einigen Produkten wie Textilien, Lederwaren, usw. ist es schon seit Jahrzehnten üblich, die Produkte im Ausland (z.B. in Niedriglohnländern in Fernost) fertigen zu lassen und dann in verschiedenen Ländern unter dem eigenen Markenlabel zu verkaufen.

Ein Problem für den Markeninhaber ist dabei, wenn der Auftragsproduzent die Produkte in größerer Stückzahl herstellt als vereinbart, und diesen Überschuss illegal auf eigene Rechnung auf den Markt bringt. Da die Produkte in den gleichen Fabriken und von den gleichen Mitarbeitern und Maschinen hergestellt wurden, besteht zwischen Original und Plagiat kein technischer Unterscheid mehr. Für den Markeninhaber kann es daher wichtig sein, seine Auftragsproduzenten in geeigneter Weise überwachen zu können. Insbesondere die Methode "digitale Zertifikate" erfreut sich zunehmender Beliebtheit, da digitale Zertifikate im Prinzip einfach und günstig auch in sehr großer Stückzahl zu erstellen und praktisch nicht zu fälschen sind. Dazu wird für jedes Gerät ein neues, asymmetrisches Schlüsselpaar erzeugt. Der private Schlüssel muss im Gerät verbleiben und gegen unberechtigte Nutzung und besonders gegen Auslesen und Kopieren zuverlässig geschützt werden; der öffentliche Schlüssel wird in authentischer Weise zu einer Certification Authority, abgekürzt CA, die als Ausgabevorrichtung ausgestaltet sein kann, transportiert, welche ihn zusammen mit anderen Gerätedaten (Seriennummer, Typ, Herstellername, Produktionsdatum, usw.) digital signiert.

Betreibt der Markeninhaber die Ausgabevorrichtung selbst oder lässt er sie von einer vertrauenswürdigen dritten Partei betreiben, so kann er die genaue Stückzahl der erzeugten Zertifikate einfach feststellen. Da der Auftragsproduzent für jedes Gerät ein neues Zertifikat beantragt, ist der CA auch die Anzahl der ordnungsgemäß produzierten Geräte bekannt. Es ist schon aus EP 3288 215 A1 bekannt, dass die Anzahl von bereits erzeugten digitalen Signaturen vor der Erzeugung einer weiteren digitalen Signatur durch ein Sicherheitsmodul überprüft wird.

Allerdings gilt diese Zuordnung nur dann exakt, wenn der Auftragsproduzent wirklich für jedes Gerät ein neues Zertifikat beantragt. Dies ist sicher dann der Fall, wenn das zum Zertifikat gehörende Schlüsselpaar auf dem produzierten Gerät in Hardware (d.h. in einem Hardware Security Chip) erzeugt wurde und der private Schlüssel nicht auslesbar ist; der Auftragsproduzent muss dann zwingend für jedes Gerät ein neues Zertifikat beantragen. Ist es dem Auftragsproduzenten dagegen möglich, für ein Schlüsselpaar, dessen privaten Schlüssel er kennt, ein Herstellerzertifikat von der CA zu erhalten, so kann er den privaten Schlüssel und das zugehörige Zertifikat auf mehreren Geräten verwenden und damit Geräte (mit gleicher Seriennummer) klonen.

Es ist Aufgabe der vorliegenden Erfindung, Verfahren und Vor- bzw. Einrichtungen bzw. Geräten mit gegenüber dem oben genannten Stand der Technik zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zur Bereitstellung eines Herkunftsortnachweises (AN) für ein digitales Schlüsselpaar, aufweisend folgende Schritte:
- Erzeugen des digitalen Schlüsselpaares an einem durch ein Gerät vorgegebenen Herkunftsort, wobei der private Schlüssel des digitalen Schlüsselpaares im Gerät zugriffsgeschützt abgelegt ist,
- Bereitstellen des Herkunftsnachweises, welcher die Erzeugung des digitalen Schlüsselpaares am genannten Herkunftsort bestätigt und welcher mittels eines vom selben Gerät bereitgestellten geheimen Schlüssels geschützt wird, und
- Ausgeben des öffentlichen Schlüssels des erzeugten digitalen Schlüsselpaares zusammen mit dem Herkunftsnachweis.

Ein weiterer Aspekt der Erfindung ist ein Sicherheitsmodul zur Bereitstellung eines Herkunftsortnachweises für die Erzeugung eines digitalen Schlüsselpaares, aufweisend:
- eine Erzeugungseinheit, die dazu ausgelegt ist, das digitale Schlüsselpaar zu erzeugen,
- eine zugriffsgeschützte Speichereinheit für den privaten Schlüssel und für einen geheimen Schlüssel,
- eine Bereitstellungseinheit, die dazu ausgelegt ist, den Herkunftsnachweises bereitzustellen, welcher die Erzeugung des digitalen Schlüsselpaares am genannten Herkunftsort bestätigt und welcher mittels des geheimen Schlüssels geschützt ist, und
- eine Ausgabeeinheit, die dazu ausgelegt ist, den öffentlichen Schlüssel des erzeugten digitalen Schlüsselpaares zusammen mit dem Herkunftsnachweis auszugeben.

Ein weiterer Aspekt der Erfindung ist ein Gerät, welches zur Anforderung von wenigstens einer Authentizitätsbescheinigung, insbesondere von wenigstens einem Gerätezertifikat, geeignet ist, aufweisend:
- ein Sicherheitsmodul insbesondere der oben genannten Art, und
- eine Verarbeitungs- und Ausgabeeinheit, die dazu ausgelegt ist, die genannte Anforderung zu erzeugen und auszugeben.

Das Gerät kann ein IOT-Gerät oder anderes Gerät sein, das beispielsweise ein Sicherheitsmodul aufweist. Das Gerät oder auch das Sicherheitsmodul kann einen geheimen Schlüssel für die (Gruppen-) Authentifizierung der öffentlichen Schlüssel von im Gerät, vorzugsweise im Sicherheitsmodul, erzeugten Schlüsselpaaren zu verwenden, um damit den Herkunfts- bzw. Erzeugungsort des Schlüsselpaares nachzuweisen.
Dieser Schlüssel kann in Anfragen beim Ausrollen von wenigstens einer Authentizitätsbescheinigung verwendet werden, und dadurch sicherzustellen, dass nur im Gerät bzw. im Sicherheitsmodul erzeugte Schlüsselpaare für die Authentizitätsbescheinigung verwendet werden (können). Andernfalls wird die Erstellung einer Authentizitätsbescheinigung verweigert.

Damit ist sichergestellt, dass die zu den Authentizitätsbescheinigungen zugehörigen privaten Schlüssel gegen Kompromittierung geschützt sind, und der Auftragsproduzent einen privaten Schlüssel und die zugehörige Authentizitätsbescheinigung nicht für mehrere Geräte verwenden kann.

Eine Weiterbildung der Erfindung sieht vor, dass der ausgegebene öffentliche Schlüssel zusammen mit dem Herkunftsnachweis zur Anforderung von wenigstens einer Authentizitätsbescheinigung, insbesondere von wenigstens einem Gerätezertifikat, verwendet wird. Die genannte Anforderung wird vorzugsweise auf Gültigkeit überprüft, wobei die Gültigkeit gegeben ist, wenn mit Hilfe des Herkunftsnachweises der Herkunftsort des Schlüsselpaares sichergestellt und/oder nachgewiesen ist.

Eine Weiterbildung der Erfindung sieht weitere Schritte vor:
- Erzeugen einer Authentizitätsbescheinigung für den öffentlichen Schlüssel, wenn die genannte Gültigkeit gegeben ist, und
- Ausgeben einer Authentizitätsbescheinigung.

Gemäß der Erfindung ist es zweckmäßig, dass der Anforderer einer Authentizitätsbescheinigung, speziell eines GeräteZertifikats, den Herkunftsort des Schlüsselpaares gegenüber der Ausgabestelle explizit nachweisen kann. Der zur angeforderten Authentizitätsbescheinigung gehörende private Schlüssel kann gemäß der von der Ausgabestelle vorgegebenen Richtlinien geschützt werden; die Ausgabestelle kann diesen (Herkunfts-) Nachweis auf Gültigkeit (über-)prüfen und damit die Einhaltung ihrer Richtlinien kontrollieren und durchsetzen. Dies ist insbesondere auch interessant bei der Erstellung von TLS-Serverzertifikaten und von Zertifikaten für untergeordnete Zertifizierungsstellen.

Eine Weiterbildung der Erfindung sieht vor, dass der geheime Schlüssel innerhalb des Gerätes nur am Herkunftsort des digitalen Schlüsselpaares gespeichert und gehalten wird. Der geheime Schlüssel kann in einer Ausführungsform der Erfindung nur auf am Herkunftsort vorliegende Daten und nicht auf Daten, die außerhalb des Herkunftsortes liegen, angewandt werden.

Eine Weiterbildung der Erfindung sieht vor, dass der geheime Schlüssel ein symmetrischer Gruppenschlüssel ist, und dass zur Erstellung des Authentizitätsnachweises des digitalen Schlüsselpaares ein symmetrisches Verfahren, insbesondere das Keyed-Hashing for Message Authentication-Verfahren (abgekürzt: HMAC), mit dem symmetrischem Gruppenschlüssel verwendet wird.

Es ist alternativ möglich, dass der geheime Schlüssel ein privater Schlüssel eines asymmetrischen Schlüsselpaares ist, und dass zur Erstellung des Authentizitätsnachweises des digitalen Schlüsselpaares ein asymmetrisches Verfahren, insbesondere eine digitale Signatur, unter Verwendung des privaten Schlüssels verwendet wird.

Ein weiterer Aspekt der Erfindung ist eine Einrichtung zum Überprüfen einer Anforderung von wenigstens einer Authentizitätsbescheinigung auf Gültigkeit, wobei die Gültigkeit gegeben ist, wenn mit Hilfe des Herkunftsnachweises der Herkunftsort des digitalen Schlüsselpaares sichergestellt und/oder nachgewiesen ist.

Ein weiterer Aspekt der Erfindung ist eine Vorrichtung zur Ausgabe von wenigstens einer Authentizitätsbescheinigung, insbesondere von wenigstens einem Gerätezertifikat, aufweisend:
- eine Einrichtung nach dem vorhergehenden Anspruch,
- eine Erzeugungseinheit, die dazu ausgelegt ist, die wenigstens eine Authentizitätsbescheinigung zu erzeugen, und
- eine Ausgabeeinheit, die dazu ausgelegt ist, die wenigstens eine Authentizitätsbescheinigung auszugeben.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einer Vorrichtung der vorstehend genannten Art ablaufen oder als Computerprogrammprodukt auf einem computerlesbaren Medium gespeichert sein.

Die Vorrichtungen, Einrichtungen bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
- Figur 1: ein Ausführungsbeispiel einer erfindungsgemäßen Vorrichtung zur Anforderung bzw. zur Ausgabe von Authentizitätsbescheinigungen in Blockdarstellung bei Anwendung eines asymmetrischen kryptographischen Schutzverfahrens für den Authentizitätsnachweis; und
- Figur 2: ein Ausführungsbeispiel einer erfindungsgemäßen Vorrichtung zur Anforderung bzw. zur Ausgabe von Authentizitätsbescheinigungen in Blockdarstellung bei Anwendung eines symmetrischen kryptographischen Schutzverfahrens für den Authentizitätsnachweis.

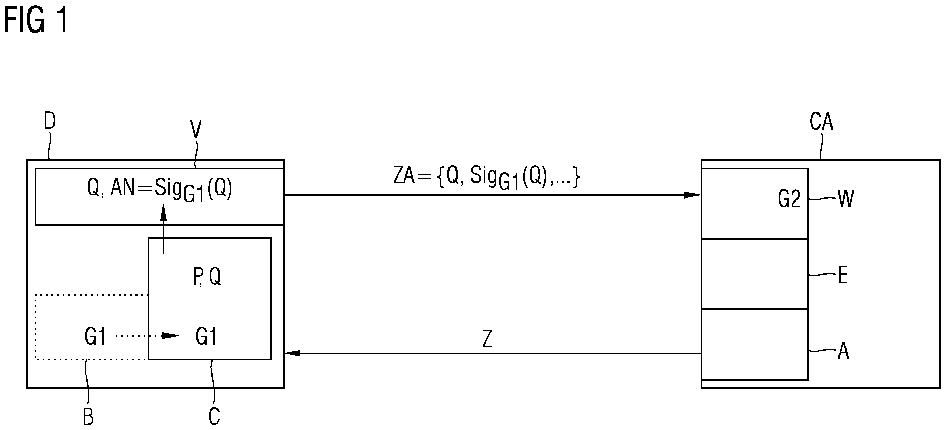

In Figur 1 ist eine Vorrichtung CA zur Ausgabe von Authentizitätsbescheinigungen Z dargestellt. Gibt die Vorrichtung CA Authentizitätsbescheinigungen Z in Form von signierten Zertifikaten aus, so wird diese auch als Zertifizierungsstelle, englisch certification authority, bezeichnet. Eine Authentizitätsbescheinigung anfordernde bzw. anfragende Stelle ist als ein Gerät D, das ein Produkt der eingangs erwähnten Art sein kann, dargestellt. Das Gerät D kann dabei ein Sicherheitsmodul C, z.B. ein kryptographischer Prozessor (Security-Chip), HSM (Hardware Security Modul) oder TPM (Trusted Platform Module) sowie eine Verarbeitungs- und Ausgabeeinheit V und eine Bereitstellungseinheit B, die auch in das Sicherheitsmodul C integriert sein kann, umfassen.

Das Gerät D erzeugt in einem Sicherheitsmodul C ein Schlüsselpaar P,Q zur Verwendung für eine Authentizitätsbescheinigung Z. Das Sicherheitsmodul C speichert zugriffsgeschützt den privaten Schlüssel P intern, und gibt den öffentlichen Schlüssel Q nach außen an das Gerät D.

Die Bereitstellungseinheit B ist dazu ausgelegt, dem Sicherheitsmodul C einen geheimen Schlüssel G1 zur Erzeugung eines Authentizitätsnachweises AN bereitzustellen. Diese Bereitstellungseinheit B ist vorzugsweise im Sicherheitsmodul C enthalten (jedoch in der Figur 1 an das Sicherheitsmodul gekoppelt dargestellt), so dass der Schlüssel G1 besonders gut gegen Auslesen und Kopieren geschützt werden kann. Besonders vorteilhaft ist, wenn der Schlüssel G1 zudem nicht von außerhalb des Sicherheitsmoduls C angesprochen und nicht auf von außerhalb des Sicherheitsmodul C stammende Daten angewendet werden kann, sondern nur intern im Sicherheitsmodul C zur Erzeugung von Authentizitätsnachweisen AN für im Sicherheitsmodul erzeugte, öffentliche Schlüssel Q angewandt wird.

Der Schlüssel G1 kann als privater asymmetrischer Schlüssel realisiert sein. In diesem Fall muss eine den Authentizitätsnachweis AN prüfende Einrichtung W nur den zum privaten Schlüssel G1 gehörenden öffentlichen Schlüssel G2 enthalten, der auch allgemein bekannt sein kann; der private Schlüssel G1 muss/soll außerhalb des Sicherheitsmoduls oder eine Reihe von gleichartigen Sicherheitsmodulen nicht bekannt sein. Der Authentizitätsnachweis kann dabei beispielsweise als Signatur über den öffentlichen Schlüssel Q ausgeführt sein: AN = Sig_{G1} (Q).

Eine Verarbeitungs- und Ausgabeeinheit V, die in das Sicherheitsmodul C integriert oder mit diesem innerhalb des Geräts D gekoppelt sein kann, ist dazu ausgelegt, eine den Schlüssel Q sowie den Authentizitätsnachweis AN enthaltene Anforderung bzw. Anfrage für eine Authentizitätsbescheinigung ZA, beispielsweise eine Zertifikatsanfrage, bereitzustellen. Die Verarbeitungs- und Ausgabeeinheit V erzeugt eine Zertifikatsanfrage ZA nach z.B. PKCS#10 (Certification Request Syntax Specification [rfc2986], CMP-Nachricht (Certificate Management Protocol [rfc4210]), etc.. Darin sind der Schlüssel Q, der Authentizitätsnachweis AN sowie vorzugsweise auch weitere Daten, die im Zertifikat Z enthalten sein sollen, wie Gerätedaten (Seriennummer, Typ, etc.) enthalten. Die Zertifikatsanfrage ZA oder Teile davon können zudem mit dem erzeugten privaten Schlüssel P signiert sein. Die Zertifikatsanfrage, welche in der Figur 1 mit ZA = {Q,Sig_{G1}(Q),...} gekennzeichnet ist, wird zur Ausgabevorrichtung CA übertragen.

Die Übertragung kann über eine drahtgebundene Kommunikationsschnittstelle bzw. Funkübertragungsschnittstelle erfolgen. Ist im Gerät D bereits ein (Hersteller- oder operatives) Gerätezertifikat vorhanden, so wird dieses Zertifikat vorteilhafterweise auch für die sichere Übertragung der Zertifikatsanfrage verwendet.

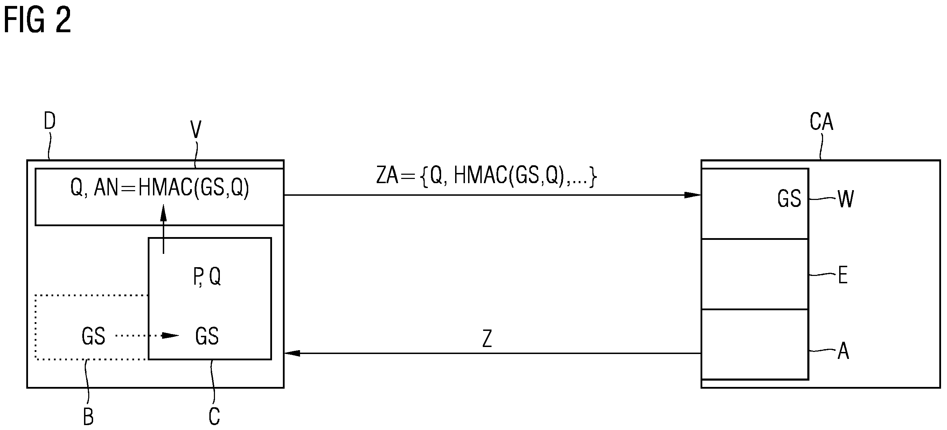

Wird Figur 2 betrachtet, dann läuft im Prinzip analog zum Vorgehen in Figur 1 ein symmetrisches kryptographisches Verfahren ab. Der Schlüssel GS (GS anstatt G1) ist hierbei ein symmetrischer Schlüssel, der nicht in einen privaten und öffentlichen Teil aufgeteilt ist. Für den Schutz des Schlüssels Q wird beispielsweise ein HMAC (Keyed-Hashing for Message Authentication) verwendet, das bei der Organisation IETF in dem Dokument rfc2104 beschrieben wird. Auch die oben genannten rfc-Dokumente sind durch diese Organisation veröffentlicht. Demnach wird das Sicherheitsmodul C mit einem symmetrischen Schlüssel GS vorpersonalisiert, der nur dem Markeninhaber des Produkts oder seinem CA-Betreiber bekannt ist. Die Zertifikatsanfrage ist in Figur 2 mit ZA = {Q,HMAC(GS,Q),...} gekennzeichnet.

Gemäß beider Figuren überprüft auf der die Anfrage empfangenden Seite die zur Ausgabevorrichtung CA gehörige Einrichtung W die Gültigkeit des Authentizitätsnachweises AN über den öffentlichen Schlüssel Q: eine digitale Signatur Sig_{G1} (Q) mit Hilfe des öffentlichen Teil G2 des asymmetrischen Gruppenschlüssels bzw. einen HMAC HMAC(GS,Q) mit Hilfe des symmetrischen Schlüssel GS. Die Gültigkeit ist dann gegeben ist, wenn mit Hilfe des geheimen Schlüssels, im Beispiel der asymmetrische G1/G2 oder symmetrische Schlüssel GS, der Herkunftsort und/oder Erzeugungsort des Schlüssels Q sichergestellt und/oder nachweisbar ist.
Im Beispiel soll sichergestellt bzw. nachgewiesen werden, dass das verwendete Schlüsselpaar P,Q in einem Gerät D, noch besser in einem Sicherheitsmodul C erzeugt wurde und der private Schlüssel P nicht auslesbar ist. Eine Erzeugungseinheit E der Ausgabevorrichtung CA erzeugt die digitale Signatur für die Authentizitätsbescheinigung Z nur, wenn die genannte Gültigkeit gegeben ist. Eine Ausgabeeinheit A gibt die Authentizitätsbescheinigung Z mit der erzeugten digitalen Signatur aus, welche zum Gerät D über dieselbe oder andere drahtgebundene Kommunikationsschnittstelle bzw. Funkübertragungsschnittstelle übertragen wird. Das Gerät D prüft die erhaltene Authentizitätsbescheinigung, ob sie zum privaten Schlüssel P passt.

Das erfindungsgemäße Verfahren ist vom verwendeten Zertifikatsmanagementprotokoll unabhängig. Es ist nicht notwendig, dass im Sicherheitsmodul dieses Protokoll implementiert ist, sondern es reicht aus, wenn das Sicherheitsmodul den öffentlichen Schlüssel Q mit einem symmetrischen oder asymmetrischen Verfahren schützt.

Gemäß einer ersten Ausführungsform der Erfindung wird bei Erzeugung eines neuen Schlüsselpaars P,Q im Sicherheitsmodul und der Herausgabe des öffentlichen Schlüssels Q in Klartext dieser bereits automatisch mit dem Schlüssel (G1 bzw. GS) geschützt; dieser Schlüssel wird nur für Authentifizierung und Integritätsschutz des öffentlichen Teils intern erzeugter Schlüsselpaare verwendet, und kann nicht in von außen aufrufbaren Funktionen benutzt werden. Für diese Ausführungsform ist eine spezielle Funktionalität im Sicherheitsmodul implementiert, die im Beispiel durch die Einheit B umgesetzt sein kann, wenn man sich diese in das Sicherheitsmodul C integriert vorstellt.

Diese Ausführungsform ist besonders auch für die Erstellung von (Issuing) CA-Zertifikaten oder Signaturzertifikaten interessant, deren Betreiber gegenüber einer übergeordneten certificate authority (Root CA) nachweisen wollen oder aufgrund einer Policy des Root-CA-Betreibers nachweisen müssen, dass der private Schlüssel besonders geschützt ist.

Gemäß einer weiteren Ausführungsform der Erfindung wird das neue Schlüsselpaar ebenfalls im Sicherheitsmodul erzeugt und der öffentliche Schlüssel Q in Klartext herausgegeben, allerdings erstmal ohne Schutz durch den Schlüssel G1 bzw. GS. Daher ist es sinnvoll, dass im Gerät D (z.B. in der Firmware) - außerhalb des Sicherheitsmoduls C, im Beispiel in der Bereitstellungseinheit B - der öffentliche Schlüssel Q dem Sicherheitsmodul zum Schützen mit HMAC bzw. Signieren wieder übergeben wird. Dies ist mit üblichen Sicherheitsmodulen, die einen entsprechenden Schlüssel besitzen, bereits möglich, bietet allerdings weniger Sicherheit, da prinzipiell mit diesem Verfahren auch andere Daten - wie außerhalb des Sicherheitsmoduls generierte öffentliche Schlüssel - durch den Schlüssel G1 bzw. GS geschützt werden könnten. Allerdings ist das Verfahren auch in diesem Fall durchaus sinnvoll einsetzbar, da der Aufwand zur Erstellung einer entsprechend manipulierten Firmware für einen nicht vertrauenswürdigen Auftragsproduzenten deutlich höher ist als in dem Fall, in dem er einfach eine beliebige Zertifikatsanfrage über seine Infrastruktur an die Ausgabevorrichtung CA schickt.

Die Prüfung der Gültigkeit der Authentizitätsbescheinigungsanfrage ZA bzw. Zertifikatsanfrage bzw. des Authentizitätsnachweises AN des öffentlichen Schlüssels Q in der Zertifikatsanfrage muss nicht notwendigerweise direkt durch die Ausgabevorrichtung CA ausgeführt werden; stattdessen kann auch eine vorgeschaltete, nicht in den Figuren dargestellte Einheit wie z. B. ein CA-Gateway im Trust Center der CA oder eine Registration Authority (RA) beim Markeninhaber diese Aufgabe übernehmen.
Diese Ausführungsform ist besonders auch für Geräte mit Herstellerzertifikaten interessant, die zwar über Sicherheitsmodul verfügen, deren Sicherheitsmodul nicht über die Funktionalität der vorgenannten ersten Ausführungsform verfügt.

Die Gruppe der Sicherheitsmodule (vorgenannte erste Ausführungsform) bzw. Geräte (vorgenannte weitere Ausführungsform), die den gleichen Schlüssel G1 bzw. GS verwenden, kann dabei unterschiedlich groß sein, beispielsweise:
- alle Sicherheitsmodule bzw. Security Chips, die für Geräte des gleichen Kunden (Markeninhaber) hergestellt werden
- alle Sicherheitsmodule bzw. Security Chips, eines Produktionsloses
- alle Geräte einer Baureihe
- alle Geräte mit der gleichen Firmware-Version
- alle Geräte eines Produktionsloses
- etc.

Es ist auch möglich, dass jedes Sicherheitsmodul bzw. jedes Gerät einen unterschiedlichen "Gruppen"-Schlüssel verwendet, d.h. die "Gruppengröße" ist dann eins. Allerdings steigt der Aufwand für die Übermittlung der Gruppenschlüssel vom Chip-Hersteller bzw. Firmware-Hersteller zur certificate authority mit der Anzahl der verwendeten Gruppen.

Werden innerhalb eines Systems mehrere, unterschiedliche Schlüssel G1 bzw. GS verwendet, so kann es erforderlich sein, in den Authentizitätsnachweis AN zusätzlich noch einen Kennzeichner hinzuzufügen, an dem eine prüfende Instanz erkennen kann, welcher der Schlüssel G1 bzw. GS verwendet wurde.

Bei Verwendung einer CMP-Nachricht ist folgende Struktur zur Implementierung der Zertifikatsanfrage möglich:
CertRequest ::= SEQUENCE {

| | |
|---|---|
| certReqId | INTEGER, -- ID for matching request and reply |
| certTemplate | CertTemplate, --Selected fields of cert to be issued |
| controls | Controls OPTIONAL } -- Attributes affecting issuance |

CertTemplate ::= SEQUENCE {

| | | |
|---|---|---|
| version | [0] Version | OPTIONAL, |
| serialNumber | [1] INTEGER | OPTIONAL, |
| signingAlg | [2] Algorithmidentifier | OPTIONAL, |
| issuer | [3] Name | OPTIONAL, |
| validity | [4] OptionalValidity | OPTIONAL, |
| subject | [5] Name | OPTIONAL, |
| publicKey | [6] SubjectPublicKeyInfo | OPTIONAL, |
| issuerUID | [7] UniqueIdentifier | OPTIONAL, |
| subjectUID | [8] UniqueIdentifier | OPTIONAL, |
| extensions | [9] Extensions | OPTIONAL } |

extensions contains extensions that the requestor wants to have placed in the certificate. These extensions would generally deal with things such as setting the key usage to keyEncipherment.

Der Authentizitätsnachweis AN (HMAC bzw. Signatur) kann beispielsweise im Feld controls in einem regToken (siehe RFC4211 Abschnitt 6.1) übertragen werden.

Es kann der Authentizitätsnachweis AN auch außerhalb der CMP-Nachricht angehängt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Das Gerät kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur Bereitstellung eines Herkunftsortnachweises (AN) für ein digitales Schlüsselpaar (P,Q), aufweisend folgende Schritte:
- Erzeugen des digitalen Schlüsselpaares (P, Q) an einem durch ein Gerät (D) vorgegebenen Herkunftsort (C), wobei der private Schlüssel (P) des digitalen Schlüsselpaares (P, Q) im Gerät (D) zugriffsgeschützt abgelegt ist,
- Bereitstellen des Herkunftsnachweises (AN), welcher die Erzeugung des digitalen Schlüsselpaares (P,Q) am genannten Herkunftsort (C) bestätigt und welcher mittels eines vom selben Gerät (D) bereitgestellten geheimen Schlüssels (G1; GS) geschützt wird, und
- Ausgeben des öffentlichen Schlüssels (Q) des erzeugten digitalen Schlüsselpaares (P, Q) zusammen mit dem Herkunftsnachweis (AN).

2. Verfahren nach dem vorhergehenden Anspruch, **dadurch gekennzeichnet, dass** der ausgegebene öffentliche Schlüssel (Q) zusammen mit dem Herkunftsnachweis (AN) zur Anforderung (ZA) von wenigstens einer Authentizitätsbescheinigung (Z), insbesondere von wenigstens einem Gerätezertifikat, verwendet wird.

3. Verfahren nach einem der vorhergehenden Ansprüche, **dadurch gekennzeichnet, dass** die genannte Anforderung auf Gültigkeit überprüft wird, wobei die Gültigkeit gegeben ist, wenn mit Hilfe des Herkunftsnachweises (AN) der Herkunftsort (C) des Schlüsselpaares (P, Q) sichergestellt und/oder nachgewiesen ist.

4. Verfahren nach dem vorhergehenden Anspruch, **gekennzeichnet durch** die Schritte:
- Erzeugen einer Authentizitätsbescheinigung (Z) für den öffentlichen Schlüssel (Q), wenn die genannte Gültigkeit gegeben ist, und
- Ausgeben einer Authentizitätsbescheinigung (Z).

5. Verfahren nach einem der vorhergehenden Ansprüche, **dadurch gekennzeichnet, dass** der geheime Schlüssel innerhalb des Gerätes (D) nur am Herkunftsort des digitalen Schlüsselpaares (P, Q) gespeichert und gehalten wird.

6. Verfahren nach einem der vorhergehenden Ansprüche, **dadurch gekennzeichnet, dass** der geheime Schlüssel nur auf am Herkunftsort vorliegende Daten angewandt wird.

7. Verfahren nach einem der vorhergehenden Ansprüche, **dadurch gekennzeichnet, dass** der geheime Schlüssel ein symmetrischer Gruppenschlüssel (GS) ist, und dass zur Erstellung des Authentizitätsnachweises (AN) des digitalen Schlüsselpaares (P, Q) ein symmetrisches Verfahren, insbesondere das Keyed-Hashing for Message Authentication-Verfahren (HMAC), mit dem symmetrischem Gruppenschlüssel (GS) verwendet wird.

8. Verfahren nach einem der vorhergehenden Ansprüche 1 bis 6, **dadurch gekennzeichnet, dass** der geheime Schlüssel ein privater Schlüssel (G1) eines asymmetrischen Schlüsselpaares (G1, G2) ist, und dass zur Erstellung des Authentizitätsnachweis (AN) des digitalen Schlüsselpaares (P,Q) ein asymmetrisches Verfahren, insbesondere eine digitale Signatur, unter Verwendung des privaten Schlüssels G1 verwendet wird.

9. Sicherheitsmodul (C) zur Bereitstellung eines Herkunftsortnachweises (AN) für die Erzeugung eines digitalen Schlüsselpaar (P, Q), aufweisend:
- eine Erzeugungseinheit, die dazu ausgelegt ist, das digitale Schlüsselpaar (P, Q) zu erzeugen,
- eine zugriffsgeschützte Speichereinheit für den privaten Schlüssel (P) und für einen geheimen Schlüssel,
- eine Bereitstellungseinheit, die dazu ausgelegt ist, den Herkunftsnachweises (AN) bereitzustellen, welcher die Erzeugung des digitalen Schlüsselpaares (P,Q) am genannten Herkunftsort (C) bestätigt und welcher mittels des geheimen Schlüssels geschützt ist, und
- eine Ausgabeeinheit, die dazu ausgelegt ist, den öffentlichen Schlüssel (Q) des erzeugten digitalen Schlüsselpaares (P, Q) zusammen mit dem Herkunftsnachweis (AN) auszugeben.

10. Gerät (D), welches zur Anforderung von wenigstens einer Authentizitätsbescheinigung (Z), insbesondere von wenigstens einem Gerätezertifikat, geeignet ist, aufweisend:
- ein Sicherheitsmodul (C) nach dem vorhergehenden Anspruch und
- eine Verarbeitungs- und Ausgabeeinheit (V), die dazu ausgelegt ist, die genannte Anforderung (ZA) zu erzeugen und auszugeben.

11. Einrichtung (W) zum Überprüfen einer Anforderung (ZA) von wenigstens einer Authentizitätsbescheinigung (Z) auf Gültigkeit, wobei die Gültigkeit gegeben ist, wenn mit Hilfe des Herkunftsnachweises (AN) der Herkunftsort (C) des digitalen Schlüsselpaares (P, Q) sichergestellt und/oder nachgewiesen ist.

12. Vorrichtung (CA) zur Ausgabe von wenigstens einer Authentizitätsbescheinigung (Z), insbesondere von wenigstens einem Gerätezertifikat, aufweisend:
- eine Einrichtung (W) nach dem vorhergehenden Anspruch,
- eine Erzeugungseinheit (E), die dazu ausgelegt ist, die wenigstens eine Authentizitätsbescheinigung (Z) zu erzeugen, und
- eine Ausgabeeinheit (A), die dazu ausgelegt ist, die wenigstens eine Authentizitätsbescheinigung (Z) auszugeben.

13. Computerprogrammprodukt, das direkt in einen Speicher eines digitalen Prozessors ladbar ist, umfassend Programmcodeteile, die dazu geeignet sind, die Schritte des Verfahrens nach einem der Verfahrensansprüche 1 bis 8 durchzuführen.

## Geänderte Patentansprüche

### Geänderte Patentansprüche gemäss Regel 137(2) EPÜ.

1. Verfahren zur Bereitstellung eines Herkunftsortnachweises (AN) für ein digitales Schlüsselpaar (P,Q), aufweisend folgende Schritte:
- Erzeugen des digitalen Schlüsselpaares (P, Q) an einem durch ein Gerät (D) vorgegebenen Herkunftsort (C), wobei der vorgegebene Herkunftsort (C) ein Sicherheitsmodul (C) des Gerätes (D) ist, wobei der private Schlüssel (P) des digitalen Schlüsselpaares (P, Q) in dem Sicherheitsmodul (C) des Gerätes (D) zugriffsgeschützt abgelegt ist,
- Bereitstellen des Herkunftsortnachweises (AN), welcher die Erzeugung des digitalen Schlüsselpaares (P,Q) am vorgegebenen Herkunftsort (C) bestätigt und welcher mittels eines vom selben Gerät (D) bereitgestellten geheimen Schlüssels (G1; GS) geschützt wird, wobei der bereitgestellte geheime Schlüssel (G1; GS) in dem Sicherheitsmodul (C) bereitgestellt wird, und
- Ausgeben des öffentlichen Schlüssels (Q) des erzeugten digitalen Schlüsselpaares (P, Q) zusammen mit dem Herkunftsortnachweis (AN).

2. Verfahren nach dem vorhergehenden Anspruch, **dadurch gekennzeichnet, dass** der ausgegebene öffentliche Schlüssel (Q) zusammen mit dem Herkunftsortnachweis (AN) zur Anforderung (ZA) von wenigstens einer Authentizitätsbescheinigung (Z), insbesondere von wenigstens einem Gerätezertifikat, verwendet wird.

3. Verfahren nach einem der vorhergehenden Ansprüche, **dadurch gekennzeichnet, dass** die genannte Anforderung auf Gültigkeit überprüft wird, wobei die Gültigkeit gegeben ist, wenn mit Hilfe des Herkunftsortnachweises (AN) der vorgegebene Herkunftsort (C) des digitalen Schlüsselpaares (P, Q) sichergestellt und/oder nachgewiesen ist.

4. Verfahren nach dem vorhergehenden Anspruch, **gekennzeichnet durch** die Schritte:
- Erzeugen einer Authentizitätsbescheinigung (Z) für den öffentlichen Schlüssel (Q), wenn die genannte Gültigkeit gegeben ist, und
- Ausgeben einer Authentizitätsbescheinigung (Z).

5. Verfahren nach einem der vorhergehenden Ansprüche, **dadurch gekennzeichnet, dass** der geheime Schlüssel (G1; GS) innerhalb des Gerätes (D) nur am vorgegebenen Herkunftsort (C) des digitalen Schlüsselpaares (P, Q) gespeichert und gehalten wird.

6. Verfahren nach einem der vorhergehenden Ansprüche, **dadurch gekennzeichnet, dass** der geheime Schlüssel (G1; GS) nur auf am vorgegebenen Herkunftsort (C) vorliegende Daten angewandt wird.

7. Verfahren nach einem der vorhergehenden Ansprüche, **dadurch gekennzeichnet, dass** der geheime Schlüssel ein symmetrischer Gruppenschlüssel (GS) ist, und dass zur Erstellung des Authentizitätsnachweises (AN) des digitalen Schlüsselpaares (P, Q) ein symmetrisches Verfahren, insbesondere das Keyed-Hashing for Message Authentication-Verfahren (HMAC), mit dem symmetrischem Gruppenschlüssel (GS) verwendet wird.

8. Verfahren nach einem der vorhergehenden Ansprüche 1 bis 6, **dadurch gekennzeichnet, dass** der geheime Schlüssel ein privater Schlüssel (G1) eines asymmetrischen Schlüsselpaares (G1, G2) ist, und dass zur Erstellung des Authentizitätsnachweis (AN) des digitalen Schlüsselpaares (P,Q) ein asymmetrisches Verfahren, insbesondere eine digitale Signatur, unter Verwendung des privaten Schlüssels (G1) verwendet wird.

9. Sicherheitsmodul (C) zur Bereitstellung eines Herkunftsortnachweises (AN) für die Erzeugung eines digitalen Schlüsselpaares (P, Q), aufweisend:
- eine Erzeugungseinheit, die dazu ausgelegt ist, das digitale Schlüsselpaar (P, Q) zu erzeugen,
- eine zugriffsgeschützte Speichereinheit für den privaten Schlüssel (P) und für einen geheimen Schlüssel (G1; GS),
- eine Bereitstellungseinheit, die dazu ausgelegt ist, den Herkunftsortnachweis (AN) bereitzustellen, welcher die Erzeugung des digitalen Schlüsselpaares (P,Q) am vorgegebenen Herkunftsort (C) bestätigt, wobei der vorgegebene Herkunftsort (C) das Sicherheitsmodul (C) ist, und welcher mittels des geheimen Schlüssels (G1; GS) geschützt ist, und
- eine Ausgabeeinheit, die dazu ausgelegt ist, den öffentlichen Schlüssel (Q) des erzeugten digitalen Schlüsselpaares (P, Q) zusammen mit dem Herkunftsortnachweis (AN) auszugeben.

10. Gerät (D), welches zur Anforderung von wenigstens einer Authentizitätsbescheinigung (Z), insbesondere von wenigstens einem Gerätezertifikat, geeignet ist, aufweisend:
- ein Sicherheitsmodul (C) nach dem vorhergehenden Anspruch und
- eine Verarbeitungs- und Ausgabeeinheit (V), die dazu ausgelegt ist, die genannte Anforderung (ZA) zu erzeugen und auszugeben.

11. Einrichtung (W) zum Überprüfen einer Anforderung (ZA) von wenigstens einer Authentizitätsbescheinigung (Z) auf Gültigkeit, wobei die Gültigkeit gegeben ist, wenn mit Hilfe eines Herkunftsortnachweises (AN) ein vorgegebener Herkunftsort (C) eines digitalen Schlüsselpaares (P, Q) sichergestellt und/oder nachgewiesen ist, wobei der vorgegebene Herkunftsort (C) ein Sicherheitsmodul (C) eines Gerätes (D) ist.

12. Vorrichtung (CA) zur Ausgabe von wenigstens einer Authentizitätsbescheinigung (Z), insbesondere von wenigstens einem Gerätezertifikat, aufweisend:
- eine Einrichtung (W) nach dem vorhergehenden Anspruch,
- eine Erzeugungseinheit (E), die dazu ausgelegt ist, die wenigstens eine Authentizitätsbescheinigung (Z) zu erzeugen, und
- eine Ausgabeeinheit (A), die dazu ausgelegt ist, die wenigstens eine Authentizitätsbescheinigung (Z) auszugeben.

13. Computerprogrammprodukt, das direkt in einen Speicher eines digitalen Prozessors ladbar ist, umfassend Programmcodeteile, die dazu geeignet sind, die Schritte des Verfahrens nach einem der Verfahrensansprüche 1 bis 8 durchzuführen.
